# EUROPÄISCHE PATENTSCHRIFT

(11) **EP 1 162 691 B1**
(45) Veröffentlichungstag und Bekanntmachung des Hinweises auf die Patenterteilung: **15.10.2003**
(21) Anmeldenummer: 01108257.5
(22) Anmeldetag: 31.03.2001
(51) Int. Cl.: H01R 4/50

(54) **Erdungsbrücke**
Grounding bridge
Pont pour la mise à la terre

(30) Priorität: 09.06.2000 DE 20004894 U
(43) Veröffentlichungstag der Anmeldung: 12.12.2001
(73) Patentinhaber: REHAU AG + Co, 95111 Rehau (DE)
(72) Erfinder: Schinzel, Hartmut, c/o Rehau AG + Co., 95111 Rehau (DE); Zielke, Peter, c/o Rehau AG + Co., 95111 Rehau (DE)

(56) Entgegenhaltungen:
- DE-A- 3 633 604
- DE-A- 4 110 251
- GB-A- 2 213 328

## Beschreibung

Die Erfindung betrifft eine Erdungsbrücke für Kabelkanäle zur Herstellung einer Anschlussverbindung zwischen den Kabelkanälen untereinander sowie deren Abdeckungen.

Bekannt sind aus der DE 36 33 604 C 2 ein Übertragungselement zur Herstellung von Anschlussverbindungen zwischen elektrischen Gerätekanälen und deren Abdeckungen. Das Übertragungselement ist als lösbar in den Gerätekanal und/oder dessen Abdeckung einsetzbares, mit seinen Randkanten gegen innere Winkelkanten des Querschnitts des Kanals oder dessen Abdeckung klemmend abstützbares, mit den Potentionalausgleichsleitungen verbindbares Federblech ausgebildet. Das Federblech besteht aus einem auf eine ebene Innenwandfläche des Gerätekanals auflegbaren, vorzugsweise rechteckigen Mittenteil und seitlich stumpf von diesem abgewinkelten, ebenfalls rechteckigen Seitenteilen. In das Seitenteil ist ein Flachsteckelement eingestanzt, auf dem jeweils die Kontaktschuhe der Potentionalausgleichsleitungen aufgesteckt werden und die Anschlussverbindungen zwischen den beiden Federblechen herstellen.

Der Nachteil dieser Lösung besteht darin, dass das Übertragungselement zur Herstellung von Anschlussverbindungen dreiteilig ausgeführt ist. Es werden je Kanalende ein Federelement eingesetzt und diese über Potentionalausgleichsleitungen mittels Kontaktschuhe an den jeweiligen Flachsteckelementen miteinander verbunden. Ein Einsatz als Stoßstellenverbinder ist nicht möglich.

Aus der GB 2 213 328 ist eine Erdungsvorrichtung bekannt, die die Erdung einer Metall-Stimplatte am Gestell eines Baugruppenträgers mit einer nach vorne offenen Nut, deren Innenteil einen Haltestreifen mit integrierten Öffnungen mit Schraubengewinde aufweist, beschreibt. Es wird eine Erdungsvorrichtung bereitgestellt, die eine U-förmige Erdungsklammer aus Federstahl mit einer Grundwand und einem Paar gegenüber angeordneten Seitenwänden beinhaltet. Die Grundwand liegt während des Betriebs der Vorrichtung am Haltestreifen an und beinhaltet in einem mittleren Teil eine Öffnung, durch welche der Schaft einer Klemmschraube hindurchgehen kann; die Enden der Seitenwände sind mit Vorsprüngen versehen, die nach Festziehen der Klemmschraube in die Stirnplatte eintauchen, wobei die Breite der Grundwand kleiner, und der Abstand zwischen den Seitenwänden im Ruhezustand der Erdungsklammer größer als die Breite eines äußeren Teils der Nut ist, wodurch die Erdungsklammer mittels Drücken der Seitenwände zueinander durch den äußeren Teil der Nut eingesetzt werden kann und nach Loslassen in der Nut positioniert gehalten wird.

Aufgabe der Erfindung ist es, eine Erdungsbrücke für Metall-Kabelkanäle zu schaffen, die als Stoßstetlenverbinder und gleichzeitig der Erdung der Kanäle dient.

Diese Aufgabe wird durch die im Anspruch 1 angegebenen Merkmale gelöst. In den Unteransprüchen sind weitere Ausgestaltungen angegeben.

Die Erdungsbrücke besteht aus einem langgestreckten bandförmigen Metallteil mit mindestens einem an seiner Stirnseite angeordneten Anschlusselement und ist an den jeweiligen Endbereichen des Metallteiles mit Abkantungen versehen, die in die Nut des Kabelkanals eingreifen. Die Abkantungen des Metallteiles bestehen aus je einem nach innen gewölbten, annähernd einem halbkreisförmigen Querschnitt aufweisenden Bereich und einem sich daran anschließenden nach außen gerichteten Bereich. Die sich gegenüberstehenden Abkantungen können durch Eindrehen eines Befestigungselements gespreizt werden. Um dies zu erreichen, ist der Abstand zwischen den gegenüberliegenden nach innen gewölbten Bereichen der Abkantungen kleiner als der Durchmesser des Befestigungselementes. Der Gegengewindebereich für das Befestigungselement kann einerseits durch das bandförmige Metallteil selber oder durch ein einschiebbares Gewindestück gebildet werden.

Anhand eines Ausführungsbeispieles soll die Erfindung näher erläutert werden.

Es zeigen:
- Figur 1:: Perspektivische Darstellung der Erdungsbrücke
- Figur 2:: Schnitt durch eine Erdungsbrücke im Bereich der Abkantungen

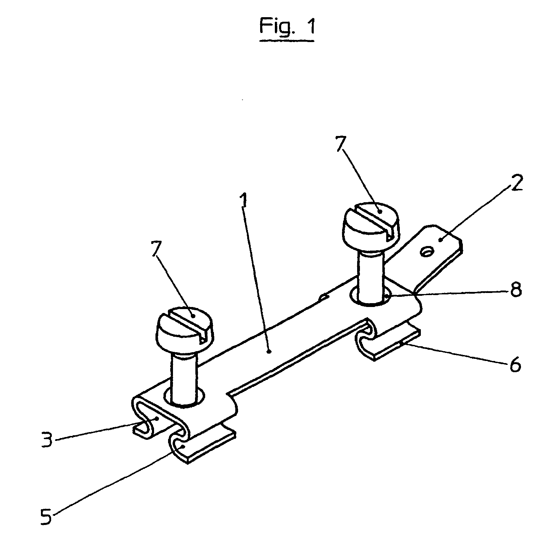

Die in der Figur 1 dargestellte Erdungsbrücke besteht aus einem langgestreckten bandförmigen Metallteil 1, an dessen einer Stirnseite ein Flachsteckanschluss 2 angeordnet ist. An den beiden Endbereichen der Erdungsbrücke sind jeweils gegenüberliegende Abkantungen 3 vorgesehen.
Diese bestehen jeweils aus einem nach innen gewölbten Bereich 5 und einem sich daran anschließenden nach außen gerichteten Bereich 6. Durch ein Befestigungselement in Form einer Schraube 7, werden die jeweils gegenüberliegenden Abkantungen 3 gespreizt.

Um dies zu erreichen, ist der Abstand zwischen den gewölbten Bereichen 5 der gegenüberliegenden Abkantungen geringer ausgeführt als der Durchmesser der Schraube. Der Gegengewindebereich 8 ist im Metallteil 1 der Erdungsbrücke angeordnet.
Die erfindungsgemäße Erdungsbrücke wird zur Verbindung der Endbereiche von Metall-Kabelkanälen, auf deren Grund eine C-förmige Nut angeordnet ist und zur Erdung der Metall-Kabelkanäle untereinander eingesetzt.

Nach dem Anbringen eines Kabelkanals, beispielsweise an einer Gebäudewand, wird die Erdungsbrücke in die C-förmige Nut 4 am Ende des Kanals eingeschoben und fixiert. Danach kann ein weiterer Kanal mit seiner C-förmigen Nut 4 auf das freie Ende der Erdungsbrücke geschoben werden und an der Wand befestigt werden.
Es liegt jedoch auch im Rahmen der Erfindung, dass die Erdungsbrücke nachträglich in die C-förmige Nut der bereits komplett aneinander montierten Kabelkanäle eingesetzt werden kann.
Das Fixieren der Erdungsbrücke erfolgt derart, dass durch Eindrehen der Schraube 7 in den gewölbten Bereich der jeweils gegenüberliegenden Abkantungen 3 diese aufgespreizt werden. Dadurch können die nach außen gerichteten Bereiche 6 der Abkantungen 3 hinter das lichte Öffnungsmaß der C-förmigen Nut 4 greifen.

Die Abkantungen 3 dienen als Gegenhalter und Verbindungselement zwischen den Endbereichen benachbarter Kabelkanäle. Die elektrische Verbindung wird über die Schrauben 7 erzielt und zwar durch die unter Druck stehenden blanken Flächen 9.

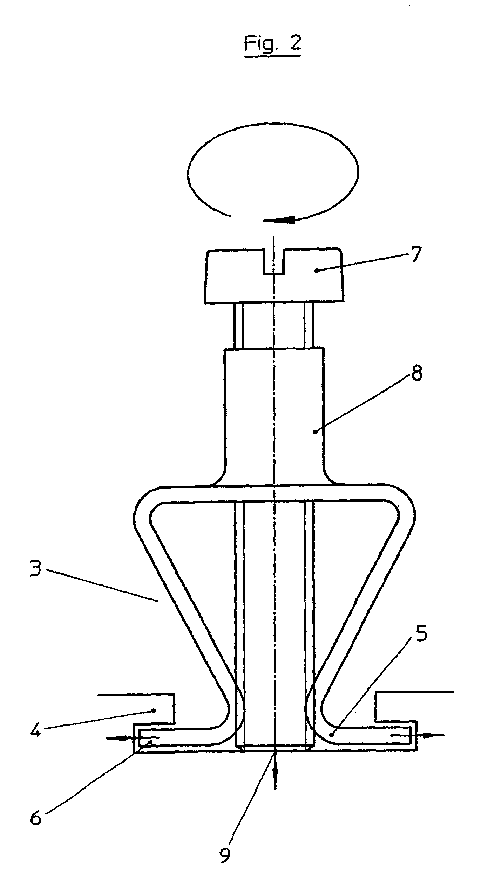

In der Figur 2 ist ein Schnitt im Bereich der Abkantungen dargestellt.

Bei dieser Ausführung ist der nach innen gewölbte Bereich 5 der Abkantung 3 am Ende einer Schräge im Fußbereich der Erdungsbrücke angeordnet.

Das Funktionsprinzip der Erdungsbrücke bleibt ebenso erhalten. Durch Anziehen der Schrauben werden die Abkantungen 3 der Erdungsbrücke nach außen gespreizt, so dass die nach außen gerichteten Bereiche 6 hinter das lichte Öffnungsmaß der C-förmigen Nut 4 greifen können.

Zusätzlich kann die Erdungsbrücke mit als Flachstecker 2 ausgebildeten Anschlusselementen ausgerüstet sein. Diese können beispielsweise als Einspeise- oder Erdungsstützpunkt verwendet werden.

### Bezugszeichenaufstellung

- 1 -: bandförmiges Metallteil
- 2 -: Flachsteckanschluss
- 3 -: Ankantung
- 4 -: C-förmige Nut
- 5 -: gewölbter Bereich
- 6 -: nach außen gerichteter Bereich
- 7 -: Schraube
- 8 -: Gegengewindebereich
- 9 -: blanke Flächen

## Patentansprüche

1. Erdungsbrücke für Kabelkanäle mit wenigstens einer im Innenbereich oder Außenbereich des Kabelkanals angeordneten Nut, wobei die Erdungsbrücke aus einem langgestreckten bandförmigen Metallteil besteht, an dessen Seiten Abkantungen, die in die Nut des Kabelkanals eingreifen, angeordnet sind,
**dadurch gekennzeichnet,**
**dass** an beiden Endbereichen der Erdungsbrücke jeweils gegenüberliegende Abkantungen (3) vorgesehen sind, die jeweils aus einem nach innen gewölbten Bereich (5) und einem sich daran anschließenden nach außen gerichteten Bereich (6) bestehen, dass der Abstand zwischen dem gegenüberliegenden, nach innen gewölbten Bereichen (5) der Abkantungen (3) im unbelasteten Zustand kleiner als die Breite und/oder der Durchmesser eines Befestigungselementes (7) ist, dass das Fixieren der Erdungsbrücke derart erfolgt, dass durch Eindrehen des Befestigungselementes (7) in den nach innen gewölbten Bereich (5) der jeweils gegenüberliegenden Abkantungen (3) diese aufspreizbar sind, und die nach außen gerichteten Bereiche (6) der Abkantungen (3) hinter das lichte Öffnungsmaß der Nut (4) greifen.

2. Erdungsbrücke nach Anspruch 1, **dadurch gekennzeichnet, dass** der Gegengewindebereich (8) des Befestigungselementes (7) durch das bandförmige Metallteil (1) gebildet ist.

3. Erdungsbrücke nach einem der vorhergehenden Ansprüche, **dadurch gekennzeichnet, dass** der Gegengewindebereich (8) des Befestigungselementes (7) durch ein einschiebbares Gewindestück gebildet ist.

4. Kabelkanal mit einer Erdungsbrücke nach einem der vorhergehenden Ansprüche.

## Claims

1. Earthing bridge for cable trunking, with at least one groove in the inner or outer part of the cable trunking, the earthing bridge consisting of an elongate metal strip, the sides of which have folded portions that engage the groove in the cable trunking,
**characterised in that**
at each end of the earthing bridge opposing folded portions (3) are provided, each consisting of an inwardly curved section (5) joined by an outwardly pointing section (6); **in that** the distance between the opposing inwardly curved sections (5) of the folded portions (3) in their unloaded condition is less than the width and/or diameter of a fastening element (7); and **in that** the securing of the earthing bridge is accomplished in such a way that by screwing the fastening elements (7) into the inwardly curved sections (5) of the respective opposing folded portions (3) the latter can be spread and the outwardly pointing sections (6) of the folded portions (3) engage the clear opening of the groove (4).

2. Earthing bridge according to claim 1, **characterised in that** the counterthreaded portion (8) for the fastening element (7) is formed by the metal strip (1).

3. Earthing bridge according to one of the preceding claims, **characterised in that** the counterthreaded portion (8) for the fastening element (7) is formed by an insertable threaded element.

4. Cable trunking with an earthing bridge according to one of the preceding claims.

## Revendications

1. Liaison de mise à la terre pour goulottes comportant au minimum une rainure étudiée à l'intérieur ou à l'extérieur de la goulotte, la liaison de mise à la terre étant constituée par une pièce métallique allongée sous forme de bande et possédant sur ses côtés des pattes venant s'accrocher dans la rainure de la goulotte,
**caractérisée en ce que**
aux deux extrémités de la liaison de mise à la terre ont été prévues des pattes (3) face à face, constituées chaque fois d'une zone bombée vers l'intérieur (5) et d'une zone contiguë orientée vers l'extérieur (6) et **en ce que** la distance entre les zones bombées vers l'intérieur (5) des pattes (3) qui se font face est, en l'absence de contrainte, inférieure à la largeur et/ou au diamètre d'un élément de fixation (7) et **en ce que** la fixation de la liaison de mise à la terre est effectuée de sorte qu'en vissant l'élément de fixation (7) dans la zone bombée vers l'intérieur (5) des pattes qui se font face (3) celles-ci peuvent subir un écartement, les zones orientées vers l'extérieur (6) des pattes (3) venant s'accrocher derrière l'ouverture de la gorge de la rainure (4).

2. Liaison de mise à la terre selon revendication 1 **caractérisée en ce que** la zone du contre filetage (8) de l'élément de fixation (7) est constitué par la pièce métallique en forme de bande (1).

3. Liaison de mise à la terre selon l'une des revendications précédentes **caractérisée en ce que** la zone du contre filetage (8) de l'élément de fixation (7) est constituée par une douille filetée encastrable.

4. Goulotte avec une liaison de mise à la terre selon l'une des revendications précédentes.
